# EUROPEAN PATENT APPLICATION

(11) **EP 4 770 073 A1**
(43) Date of publication of application: **01.07.2026**
(21) Application number: 24859512.6
(22) Date of filing: 19.08.2024
(51) Int. Cl.: H04N 1/60, B41J 2/525, B41J 29/393, G01N 21/892, G06T 1/00, H04N 1/407

(54) **IMAGE PROCESSING METHOD, IMAGE PROCESSING DEVICE, PROGRAM, AND CONVERSION DATA**

(30) Priority: 25.08.2023 JP 2023137406
(71) Applicant: FUJIFILM Corporation, Tokyo 106-8620 (JP)
(72) Inventor: MATSUDA, Takashi, Ashigarakami-gun, Kanagawa 258-8577 (JP); UKISHIMA, Masayuki, Ashigarakami-gun, Kanagawa 258-8577 (JP)
(74) Representative: HGF
(86) International application number: PCT/JP2024/029265
(87) International publication number: WO 2025/047479

(57) **Abstract**

Provided are an image processing method, an image processing apparatus, a program, and conversion data in which a pixel value of image data serving as a basis of an output image is converted according to a tendency of a pixel value of read data of the output image. An image processing method includes acquiring first image data (S10), acquiring second image data (S12), creating conversion data for converting the first image data for each color, based on a statistical value of a set of second pixel values for each first pixel value, where the second pixel value of the second image data is associated with a first pixel value at the same pixel position in the first image data, each time the second image data is acquired (S20), and converting the first image data for each color using the conversion data (S22).

## Description

### BACKGROUND OF THE INVENTION

### 1. Field of the Invention

The present invention relates to an image processing method, an image processing apparatus, a program, and conversion data.

### 2. Description of the Related Art

An examination of a printed image, in which print data of the printed image output by operating a printing device based on the print data is compared with read data of the printed image to detect a defect or the like in the printed image, is known. The print data in the present specification may be referred to as an original document image, a master image, and the like.

JP2021-146594A describes an examination apparatus that generates a master image from bitmap data received from an engine controller, generates a read image obtained by reading a printed article, which is a recording medium, output from a print engine, and performs an examination on an output result of the printed article using the master image and the read image.

The apparatus described in JP2021-146594A comprises a color conversion processing unit that performs color space conversion to RGB on multivalued data of CMKY. The color space conversion is performed with reference to a color conversion table in which a CMKY value and an RGB value are associated with each other. In the apparatus, the color conversion table is provided for each paper type, and the color conversion is performed for each paper type.

JP2016-192742A describes an image processing apparatus that detects a color mismatch between original document image data and a printed article. The apparatus described in JP2016-192742A detects a color mismatch between an original document image and a target printed article based on statistical information obtained for each same image signal value. In the apparatus, the shape of a histogram obtained for each same original document image signal value is applied as the statistical information obtained for each same image signal value.

### SUMMARY OF THE INVENTION

However, the apparatus described in JP2021-146594A comprises a color conversion table for each paper type, but it is difficult to correspond to all of various types of paper used for printing. In addition, a memory that stores a color conversion table corresponding to all of the various types of paper increases the amount of consumed storage capacity.

In the apparatus described in JP2016-192742A, the amount of operation is relatively large, and the processing time is also relatively long, such as the association between an object of the original document image and an object of the read image of the printed article, and the conversion of the color mismatch between the original document image data and the printed article into a Lab value. On the other hand, the examination of the printed article requires processing for a relatively short period.

The present invention has been made in view of such circumstances, and an object of the present invention is to provide an image processing method, an image processing apparatus, a program, and conversion data in which a pixel value of image data serving as a basis of an output image is converted according to a tendency of a pixel value of read data of the output image.

An image processing method according to a first aspect of the present disclosure comprises acquiring first image data, acquiring second image data generated by reading a first image from which the first image data is output, creating conversion data for converting a first pixel value of the first image data for each color, based on a statistical value of a set of second pixel values for each first pixel value, where the second pixel value represents a pixel value for each pixel position in the second image data and is associated with the first pixel value that represents a pixel value at the same pixel position in the first image data, and converting the first pixel value of the first image data for each color using the conversion data created each time the second image data is acquired.

According to the image processing method of the first aspect of the present disclosure, the first pixel value of the first image data for each color is converted using the conversion data generated based on the statistical value of the set of the second pixel values. Accordingly, the conversion of the first image data in which the statistical value of the set of second pixel values is reflected is performed.

In addition, the conversion of the first image data is performed each time the second image data is acquired. Accordingly, the conversion of the first image data corresponding to each of a plurality of pieces of the second image data may be performed.

The first image data may include one or more colors. Information on the colors included in the first image data may be color representation based on additive mixing or may be color reproduction based on subtractive color mixing.

The statistical value may be calculated by applying a statistical operation to a plurality of the second pixel values corresponding to the first pixel value.

In the image processing method according to a second aspect, in the image processing method of the first aspect, a first pixel value map that represents the first pixel value for each pixel position in the first image data may be created, a second pixel value map that represents the second pixel value for each pixel position in the second image data may be created, and the second pixel value may be associated with the first pixel value at the same pixel position in the first image data using the first pixel value map and the second pixel value map.

According to such an aspect, in the association of the second pixel value with the first pixel value at the same pixel position in the first image data, the second pixel value for each pixel position in the second pixel value map may be associated with the first pixel value for each pixel position in the first pixel value map.

An aspect in which resolution conversion for matching a resolution of the first image data and a resolution of the second image data is performed is preferable.

In the image processing method according to a third aspect, in the image processing method of the first aspect or the second aspect, an arithmetic mean value or a median value may be applied as the statistical value.

According to such an aspect, relatively short processing is applied, and the statistical value of the second pixel value having relatively high reliability is acquired.

In the image processing method according to a fourth aspect, in the image processing method of any one aspect of the first aspect to third aspect, the first image data including information on a plurality of colors may be acquired, and the second pixel value for each pixel position in the second image data for each color may be associated with the first pixel value at the same pixel position in the first image data of the same color as the second image data.

According to such an aspect, in a case where the first image data includes the information on the plurality of colors, the association of the second pixel value of the second image data with the first pixel value of the first image data is performed for each of the same colors.

In the image processing method according to a fifth aspect, in the image processing method of any one aspect of the first aspect to third aspect, the first image data including information on a plurality of colors may be acquired, and the second pixel value for each pixel position in the second image data for each color may be associated with the first pixel value of the first image data including the information on the plurality of colors.

According to such an aspect, it is possible to associate the first pixel value of the first image data including the information on the plurality of colors with the second pixel value of the second image data in which information on a color different from a color of interest in the first image data is reflected.

In the image processing method according to a sixth aspect, in the image processing method of any one aspect of the first aspect to fifth aspect, a lookup table for converting the first pixel value of the first image data for each color may be created as the conversion data, and reference data in a case of examining a defect of an output image of the first image data by converting the first pixel value of the first image data may be created using the lookup table.

According to such an aspect, the lookup table based on the statistical value of the second pixel value for each first pixel value is created for each color of the first image data, and the pixel value of the first image data is converted for each color. Accordingly, the conversion of the first pixel value of the first image data is completed by the relatively short processing.

In the image processing method according to a seventh aspect, in the image processing method of any one aspect of the first aspect to sixth aspect, print data serving as an original document for printing may be acquired as the first image data, and read data for each color of a printed image printed by applying the print data may be acquired as the second image data.

According to such an aspect, the conversion of the first pixel value of the print data in which a tendency of the second pixel value of the read data of the printed image is reflected is performed.

An image processing apparatus according to an eighth aspect of the present disclosure comprises one or more processors, and one or more memories that store a program including one or more instructions executed by the one or more processors, in which the one or more processors are configured to execute the program to acquire first image data, acquire second image data generated by reading a first image from which the first image data is output, create conversion data for converting a first pixel value of the first image data for each color, based on a statistical value of a set of second pixel values for each first pixel value, where the second pixel value represents a pixel value for each pixel position in the second image data and is associated with the first pixel value that represents a pixel value at the same pixel position in the first image data, and convert the first pixel value of the first image data for each color using the conversion data created each time the second image data is acquired.

According to the image processing apparatus according to the eighth aspect of the present disclosure, it is possible to obtain the same actions and effects as those of the image processing method according to the first aspect of the present disclosure. Configuration requirements of the image processing method according to the second aspect to the seventh aspect may be applied to configuration requirements of the image processing apparatus according to the other aspects.

A program according to a ninth aspect of the present disclosure is a program causing a computer including one or more processors and one or more memories that store a program including one or more instructions executed by the one or more processors to realize a function of acquiring first image data, a function of acquiring second image data generated by reading a first image from which the first image data is output, a function of creating conversion data for converting a first pixel value of the first image data for each color, based on a statistical value of a set of second pixel values for each first pixel value, where the second pixel value represents a pixel value for each pixel position in the second image data and is associated with the first pixel value that represents a pixel value at the same pixel position in the first image data, and a function of converting the first pixel value of the first image data for each color using the conversion data created each time the second image data is acquired.

According to the program according to the ninth aspect of the present disclosure, it is possible to obtain the same actions and effects as those of the image processing method according to the first aspect of the present disclosure. The configuration requirements of the image processing method according to the second aspect to seventh aspect may be applied to configuration requirements of the program according to the other aspects.

Conversion data according to a tenth aspect of the present disclosure is conversion data that converts a first pixel value of first image data for each color, based on a statistical value of a set of second pixel values for each first pixel value, where the second pixel value represents a pixel value for each pixel position in second image data generated by reading a first image output based on the first image data and is associated with the first pixel value that represents a pixel value at the same pixel position in the first image data.

According to the conversion data according to the tenth aspect of the present disclosure, it is possible to obtain the same actions and effects as those of the image processing method according to the first aspect of the present disclosure. The configuration requirements of the image processing method according to the second aspect to seventh aspect may be applied to configuration requirements of the conversion data according to the other aspects.

According to the present invention, the first pixel value of the first image data for each color is converted using the conversion data generated based on the statistical value of the set of the second pixel values. Accordingly, the conversion of the first image data in which the statistical value of the set of second pixel values is reflected is performed.

In addition, the conversion of the first image data is performed each time the second image data is acquired. Accordingly, the conversion of the first image data corresponding to each of a plurality of pieces of the second image data may be performed.

### BRIEF DESCRIPTION OF THE DRAWINGS

FIG. 1 is a functional block diagram illustrating an electric configuration of an image processing apparatus according to an embodiment.
FIG. 2 is a schematic diagram illustrating a specific example of pixel value maps.
FIG. 3 is a schematic diagram illustrating specific examples of a pixel value corresponding set and specific examples of a statistical value.
FIG. 4 is a schematic diagram of reference image data.
FIG. 5 is a schematic diagram illustrating a first example of a pixel value of print data.
FIG. 6 is a schematic diagram illustrating a second example of the pixel value of the print data.
FIG. 7 is a schematic diagram illustrating an example of the pixel value of the print data according to the second example.
FIG. 8 is a schematic diagram illustrating a third example of the pixel value of the print data.
FIG. 9 is a schematic diagram illustrating an example of the pixel value of the print data according to the third example.
FIG. 10 is a schematic diagram illustrating a fourth example of the pixel value of the print data.
FIG. 11 is a schematic diagram illustrating an example of the pixel value of the print data according to the fourth example.
FIG. 12 is a schematic diagram illustrating a fifth example of the pixel value of the print data.
FIG. 13 is a schematic diagram illustrating a sixth example of the pixel value of the print data.
FIG. 14 is a schematic diagram illustrating an example of the pixel value of the print data according to the sixth example.
FIG. 15 is a block diagram illustrating a hardware configuration of the image processing apparatus illustrated in FIG. 1.
FIG. 16 is a flowchart illustrating a procedure of an examination method according to the embodiment.
FIG. 17 is a block diagram illustrating a configuration example of a printing system comprising the image processing apparatus illustrated in FIG. 1.
FIG. 18 is a functional block diagram illustrating an electric configuration of the printing system illustrated in FIG. 17.

### DESCRIPTION OF THE PREFERRED EMBODIMENTS

Hereinafter, a preferred embodiment of the present invention will be described in detail with reference to the accompanying drawings. In the present specification, the same constituent elements are denoted by the same reference numerals, and the duplicate description thereof will be omitted as appropriate. In addition, in the following embodiment, in a case where a plurality of constituent elements are described and listed, it may be interpreted that at least one of the plurality of constituent elements is included.

### [Configuration Example of Image Processing Apparatus According to Embodiment]

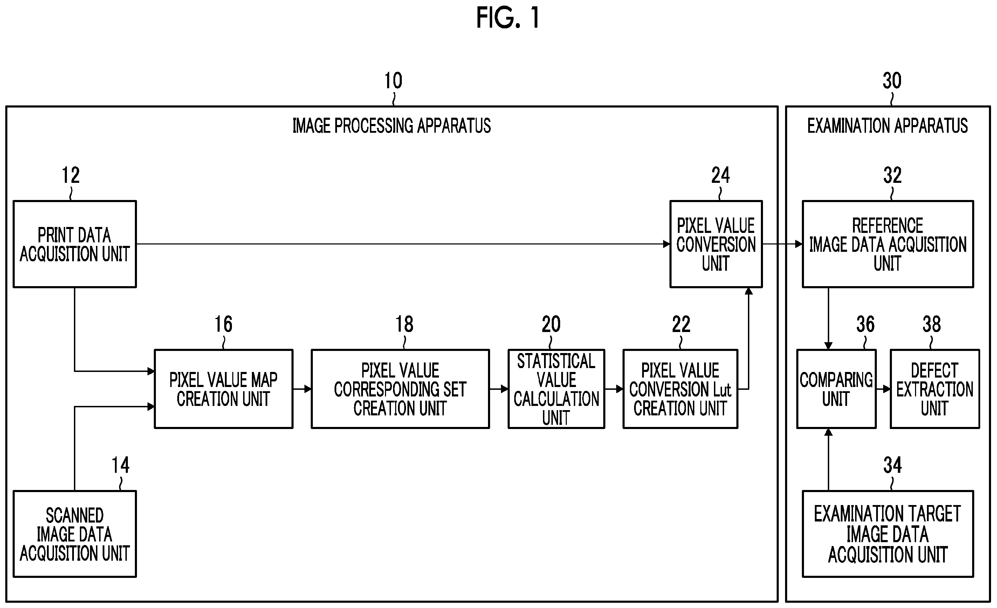

FIG. 1 is a functional block diagram illustrating an electric configuration of an image processing apparatus according to an embodiment. An image processing apparatus 10 illustrated in FIG. 1 generates reference image data for examination comparison applied to a defect examination of a printed image that is printed by operating a printing device based on print data.

In the defect examination of the printed image, the examination target image data and the reference image data are compared with each other, and the defect of the printed image is extracted based on the comparison result. An example of the examination target image data includes scanned image data generated by reading a printed image using a reading device such as a scanner.

In a case where printing is performed, print data having color information of CMYK, which is an ink color, is transferred to a printer. The CMYK print data is converted into color information of the scanned image data. An example of the color information of the scanned image data includes RGB. It should be noted that C, M, Y, and K represent cyan, magenta, yellow, and black, respectively. In addition, R, G, and B represent red, green, and blue, respectively.

In the conversion of the color information from CMYK to RGB, a color conversion table which is a lookup table in which a value of CMYK and a value of RGB are associated with each other is referred to. That is, in the conversion of the color information, a lookup table representing a correspondence relationship of the color information is created in advance and used.

For the conversion of the color information, conversion values may be calculated using an operation for a plurality of pixel positions in a conversion source image and a conversion destination image that are targets of the conversion of the color information. It should be noted that the lookup table may be referred to as Lut using an abbreviation of a lookup table.

However, in the related art, conditions used in a case of matching the color information of the print data and the color information of the scanned image data are always fixed, and the color development in the printed image may change in a case where printing conditions change, such as a case where a print medium used for printing changes. In addition, in a case where the printing conditions are changed, scanning conditions in scanning the printed image may be changed. In this case, in a case where the print data in which the color information is simply converted and the scanned image data are compared, a large difference occurs between the print data and the scanned image data. In the apparatus described in JP2021-146594A, a lookup table is created for each paper type, but it is difficult to correspond to all of the various types of print media. In addition, in a case where a large number of lookup tables corresponding to a large number of print media are stored, the consumed capacity of a memory increases.

The image processing apparatus 10 according to the embodiment corrects the pixel value of the print data for each color according to a tendency of the pixel value of the scanned image data, and generates the reference image data for each piece of the scanned image data each time the scanned image data is acquired. Accordingly, the reference image data in which the tendency of the pixel value for each color of the plurality of pieces of the scanned image data is reflected is generated, and a decrease in the accuracy of the defect examination of the printed image due to a change in the printing conditions, imaging conditions, and the like in the scanned image data is suppressed.

The image processing apparatus 10 comprises a print data acquisition unit 12, and the print data acquisition unit 12 acquires print data to be transferred to a printer. The print data acquisition unit 12 may perform color conversion of the acquired print data. For example, in a case where CMYK print data is transferred to a printer, the CMYK print data may be color-converted into RGB print data. The image processing apparatus 10 may comprise a color conversion processing unit that performs color conversion of the print data.

The image processing apparatus 10 comprises a scanned image data acquisition unit 14. The scanned image data acquisition unit 14 acquires scanned image data used for the defect examination of the printed image. The scanned image data acquisition unit 14 may acquire the scanned image data from a scanner that reads the printed image, or may acquire the scanned image data from an examination apparatus that performs the defect examination of the printed image.

The image processing apparatus 10 comprises a pixel value map creation unit 16. The pixel value map creation unit 16 creates a print pixel value map that represents a pixel value for each pixel position of the print data and a scanned pixel value map that represents a pixel value for each pixel position of the scanned image data.

The pixel value map creation unit 16 performs registration between the print data and the scanned image data and converts both of the print data and the scanned image data into the same resolution. The registration between the print data and the scanned image data may include parallel movement, rotational movement, enlargement, and reduction in any direction.

In a case where a correlation value between the print data registered with the scanned image data and the scanned image data is calculated, and the position is corrected and the correlation value is calculated repeatedly so that the correlation value is relatively high to improve the accuracy of the registration between the print data and the scanned image data, it is possible to obtain a relatively high effect.

In the resolution conversion between the print data and the scanned image data, the resolution of the scanned image data may be converted with reference to the resolution of the print data, the resolution of the print data may be converted with reference to the resolution of the scanned image data, or both the print data and the scanned image data may be converted into a specified resolution different from the original resolution of both.

The image processing apparatus 10 may comprise, as constituent elements different from the pixel value map creation unit 16, a registration processing unit that performs registration between the print data and the scanned image data, and a resolution conversion unit that performs resolution conversion between the print data and the scanned image data.

The image processing apparatus 10 comprises a pixel value corresponding set creation unit 18. The pixel value corresponding set creation unit 18 creates a pixel value corresponding set, which is a set of pixel values of the scanned image data corresponding to each pixel value of the print data, based on the print pixel value map and the scanned pixel value map.

The image processing apparatus 10 comprises a statistical value calculation unit 20. The statistical value calculation unit 20 calculates a statistical value for a set of a plurality of pixel values of the scanned image data for each pixel value of the print data based on the pixel value corresponding set. As the statistical value, an arithmetic mean value, a median value, or the like may be applied.

The image processing apparatus 10 comprises a pixel value conversion lookup table creation unit 22. The pixel value conversion lookup table creation unit 22 creates a pixel value conversion lookup table applied to the conversion processing of the pixel value of the print data using the statistical value of the pixel value of the scanned image data for each pixel value of the print data.

The pixel value conversion lookup table is created for each color of the print data. For example, in a case where the print data is RGB, a pixel value conversion lookup table of R, a pixel value conversion lookup table of G, and a pixel value conversion lookup table of B are created.

The image processing apparatus 10 comprises a pixel value conversion unit 24. The pixel value conversion unit 24 performs conversion processing on the pixel value of the print data using the pixel value conversion lookup table to generate the reference image data for examination comparison.

For example, the pixel value of R at each pixel position of the print data is converted using the pixel value conversion lookup table of R, and the pixel value of R at each pixel position of the reference image data is acquired. For B and G, the pixel value of G and the pixel value of B at each pixel position of the reference image data are acquired through the same processing as that for R. The reference image data is transferred to an examination apparatus 30.

The examination apparatus 30 comprises a reference image data acquisition unit 32, an examination target image data acquisition unit 34, a comparing unit 36, and a defect extraction unit 38. The reference image data acquisition unit 32 acquires the reference image data transferred from the image processing apparatus 10. The examination target image data acquisition unit 34 acquires the scanned image data as the examination target image data.

The comparing unit 36 compares the reference image data with the scanned image data. The comparing unit 36 may perform registration between the reference image data and the scanned image data, and resolution matching between the reference image data and the scanned image data. A processing unit that performs the registration and a processing unit that perform the resolution matching may be provided in the examination apparatus 30 as independent processing units different from the constituent elements of the examination apparatus 30, or may be provided in constituent elements different from the comparing unit 36 such as the reference image data acquisition unit 32 and the examination target image data acquisition unit 34.

The defect extraction unit 38 extracts the defect of the printed image based on the comparison result between the reference image data and the scanned image data. The defect extraction unit 38 may generate defect information such as a position of the defect and a degree of the defect in the printed image, and output the defect information.

It should be noted that the print data described in the embodiment is an example of the first image data, and the printed image described in the embodiment is an example of the first image. The scanned image data described in the embodiment is an example of the second image data. The printed image described in the embodiment is an example of an output image, and the reference image data described in the embodiment is an example of reference data.

### [Specific Example of Pixel Value Map]

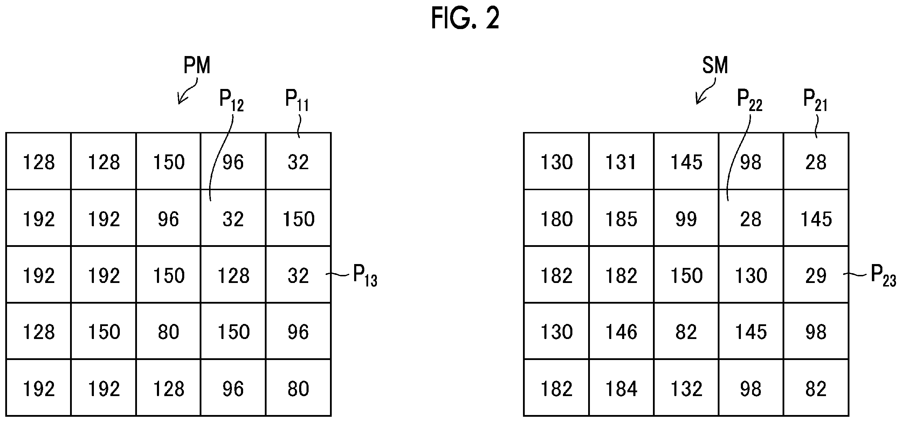

FIG. 2 is a schematic diagram illustrating a specific example of the pixel value maps. A print pixel value map PM illustrated in FIG. 2 corresponds to the print data of any one color of the print data of a plurality of colors, and represents the pixel value for one color for each pixel position. The print pixel value map PM illustrated in FIG. 2 corresponds to R print data of the RGB print data.

Similarly to the print pixel value map PM of R illustrated in FIG. 2, a print pixel value map of G corresponding to G print data in the RGB print data and a print pixel value map of B corresponding to the B print data in the RGB print data are created.

In addition, a scanned pixel value map SM illustrated in FIG. 2 is any one color of a plurality of colors in the scanned image data, and represents the pixel value for each pixel position for the same color as the print pixel value map PM. The scanned pixel value map SM for each color is created for all colors constituting the scanned image data. In FIG. 2, an integer of 0 or more and 255 or less is exemplified as the pixel value in the print pixel value map PM and the scanned pixel value map SM.

The pixel position in the print pixel value map PM and the pixel value in the scanned pixel value map SM have a one-to-one correspondence relationship. For example, a pixel position P₁₁ in the print pixel value map PM and a pixel position P₂₁ in the scanned pixel value map SM are the same pixel position. Similarly, a pixel position P₁₂ in the print pixel value map PM and a pixel position P₂₂ in the scanned pixel value map SM are the same pixel position, and a pixel position P₁₃ in the print pixel value map PM and a pixel position P₂₃ in the scanned pixel value map SM are the same pixel position.

The pixel value of the print data described in the embodiment is an example of a first pixel value, and the pixel value of the scanned image data described in the embodiment is an example of a second pixel value. In addition, the print pixel value map PM described in the embodiment is an example of a first pixel value map, and the scanned pixel value map SM described in the embodiment is an example of a second pixel value map.

### [Specific Example of Pixel Value Corresponding Set]

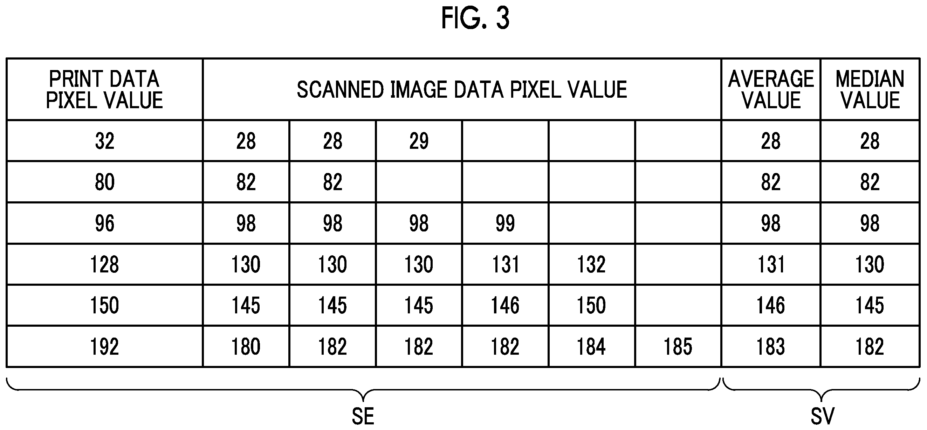

FIG. 3 is a schematic diagram illustrating specific examples of the pixel value corresponding set and specific examples of the statistical value. In FIG. 3, a pixel value corresponding set SE is schematically illustrated as a list. In addition, a statistical value SV of the set of the pixel values in the scanned image data is illustrated in FIG. 3.

The pixel value corresponding set SE illustrated in FIG. 3 is created as a set of one or more pixel values of the scanned image data for each pixel value of the print data, in which the pixel value at the same pixel position as the pixel position of the print pixel value map PM is associated with the pixel value for each pixel position in the scanned pixel value map SM illustrated in FIG. 2.

For example, the pixel value of 28, which is the pixel value at the pixel position P₂₁, the pixel value of 28, which is the pixel value at the pixel position P₂₂, and the pixel value of 29, which is the pixel value at the pixel position P₂₃, in the scanned pixel value map SM, are associated with the pixel value of 32 of the print data. In this way, for all the pixel values applied to the print data, the pixel values at the same pixel positions as those in the print pixel value map PM in the scanned pixel value map SM are associated with each other.

FIG. 3 illustrates a set of pixel values of any one color among one or more colors constituting the scanned image data. The pixel value corresponding set SE is created for all colors constituting the scanned image data.

### [Specific Example of Statistical Value]

In FIG. 3, an average value and a median value are exemplified as the statistical value SV of the set of the pixel values in the scanned image data. An arithmetic mean value may be applied to the average value. The statistical value SV may be a value other than the average value and the median value, such as a standard deviation.

### [Creation of Pixel Value Conversion Lookup Table]

The pixel value conversion lookup table applied in a case of performing conversion from the print data to the reference image data is created based on the statistical value SV of the set of the pixel values in the scanned image data for each pixel value of the print data illustrated in FIG. 3.

In the pixel value conversion lookup table, conversion data for converting the pixel value of the print data is specified based on the statistical value SV of the set of the pixel values in the scanned image data for each pixel value of the print data. For example, 30, which is the pixel value of the print data, is converted into 28, which is the average value of the set of the pixel values in the scanned image data. The pixel value conversion lookup table is created for each color of the print data.

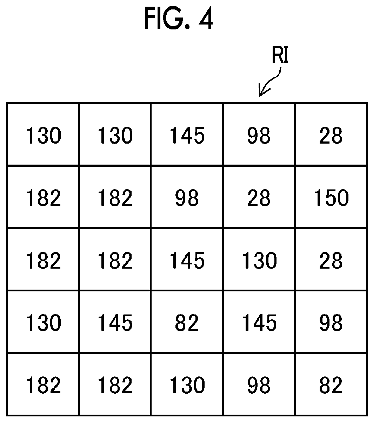

FIG. 4 is a schematic diagram of the reference image data. In reference image data RI illustrated in FIG. 4, each of 32, 80, 96, 128, 150, and 192, which are the pixel values of the print data illustrated in FIG. 3, is converted into 28, 82, 98, 130, 145, and 182, which are the median values of the set of the pixel values in the scanned image data, and generated.

Since the area of the defect of the printed image is small with respect to the entire area of the printed image, it is considered that the pixel value of the defect of the printed image is unlikely to match the statistical value SV of the set of the pixel values in the scanned image data. In a case where the pixel value of the defect of the printed image matches the statistical value SV of the set of the pixel values in the scanned image data, the pixel value of a normal region of the printed image is determined as an abnormal value. Therefore, even in a case where the position of the defect in the printed image is not specified, the presence or absence of the defect is specified.

In the conversion of the print data into the reference image data, the pixel value corresponding set SE, which is the set of the pixel values at the same positions as those of the print data, is created for the scanned image data, the statistical value SV of the set of the pixel values of the scanned image data for each pixel value of the print data is calculated, the pixel value conversion lookup table is created based on the statistical value SV, and the print data is converted by applying the pixel value conversion lookup table. A series of these pieces of processing is completed by relatively short processing.

In addition, since the pixel value conversion lookup table is created for each color constituting the scanned image data, it is not necessary to consider Lab or the like due to the correlation of each color of the scanned image data, and high-speed processing can be performed.

### [Specific Example of Pixel Value of Print Data]

### [Example of Pixel Value for Each RGB]

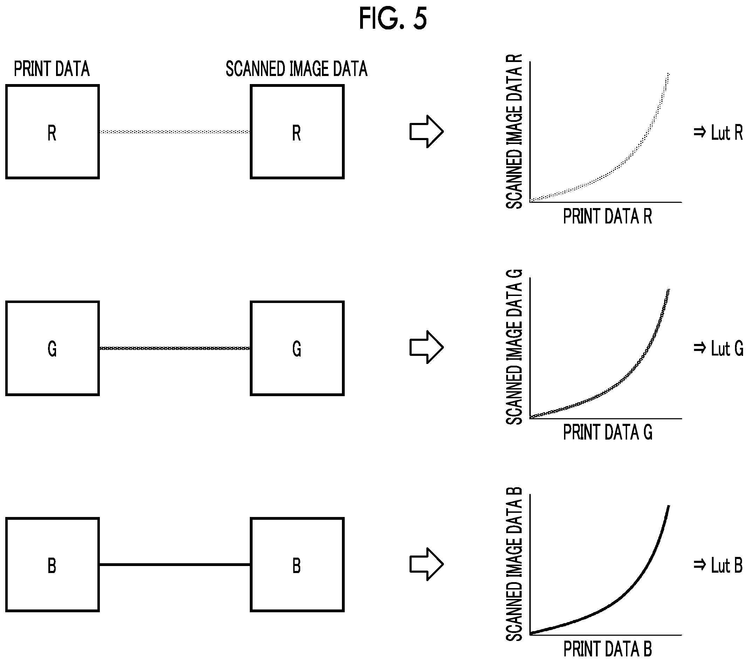

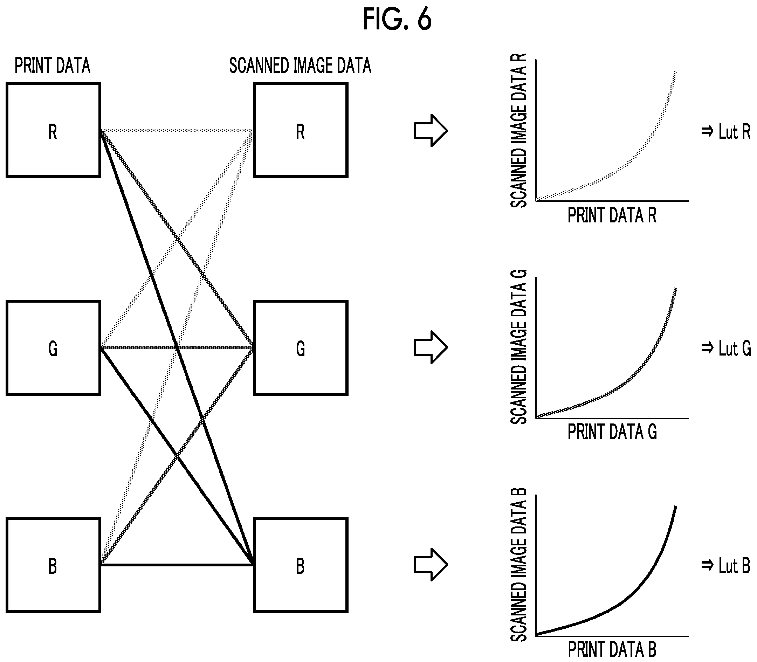

FIG. 5 is a schematic diagram illustrating a first example of the pixel value of the print data. In FIG. 5, a correspondence relationship between print data R and scanned image data R, a correspondence relationship between print data G and scanned image data G, and a correspondence relationship between print data B and scanned image data B are schematically illustrated by applying a graph format. The same applies to the graphs illustrated in FIG. 6, FIG. 8, FIG. 10, FIG. 12, and FIG. 13.

In a case where the print data is RGB and the scanned image data is RGB, the pixel value conversion lookup table for converting the pixel value of the print data according to the correspondence relationship between the print data and the scanned image data for each color of R, B, and G is created.

FIG. 5 exemplifies a pixel value conversion lookup table LutR for converting the pixel value of the print data R, a pixel value conversion lookup table LutG for converting the pixel value of the print data G, and a pixel value conversion lookup table LutB for converting the pixel value of the print data B.

### [Example of Pixel Value in Which All RGB Information is Used]

FIG. 6 is a schematic diagram illustrating a second example of the pixel value of the print data. The pixel value of the print data may include information on two or more types of colors. FIG. 6 illustrates an example in which all RGB information is used as the pixel value of the print data, and an example in which information on three types of colors is included.

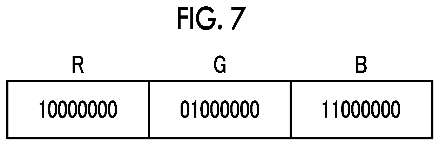

FIG. 7 is a schematic diagram illustrating an example of the pixel value of the print data according to the second example. In FIG. 7, an example is illustrated in which 8-bit data is applied as the pixel value of each color, which is the pixel value of R, the pixel value of G, and the pixel value of B at any pixel position used in the print data.

In the print data, an example of the pixel value in which all the RGB information is used is an example in which the pixel values of the 8-bit data of each color are connected and handled as 24-bit data. In a case where the pixel value conversion lookup table LutR of R is created, 8 bits from the most significant bit may be set as the pixel value of R, 8 bits from the 9th bit to the 16th bit may be set as the pixel value of G, and 8 bits from the 17th bit to the most significant bit may be set as the pixel value of B. The pixel value of the 24-bit data generated by connecting the pixel values of the 8-bit data of each color illustrated in FIG. 7 is represented by 8405184 by applying decimal numbers.

In addition, in a case where the pixel value conversion lookup table LutG of G is created, the 24-bit data arranged in the order of the pixel value of G, the pixel value of B, and the pixel value of R from the most significant bit may be used as the pixel value of the print data.

Similarly, in a case where the pixel value conversion lookup table LutB of B is created, the 24-bit data arranged in the order of the pixel value of B, the pixel value of R, and the pixel value of G from the most significant bit may be used as the pixel value of the print data.

That is, the pixel value of the color of interest may be set to the most significant bit side, and the pixel values of colors different from the color of interest may be arranged in the relatively descending order of the correlation with the color of interest to create the pixel value of the print data including information of all the colors.

### [Example of Pixel Value in Which Part of RGB Information is Used]

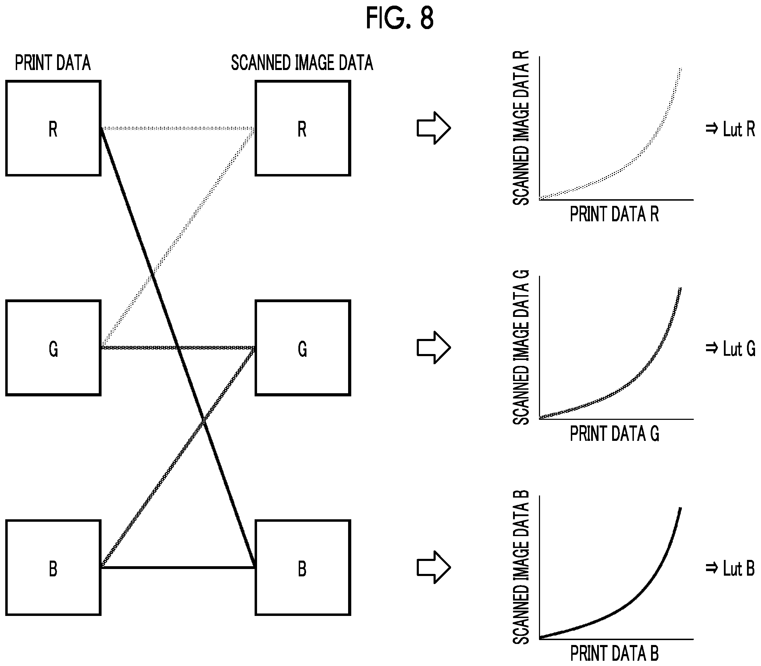

FIG. 8 is a schematic diagram illustrating a third example of the pixel value of the print data. An example in which a part of information on the color different from the color of interest is used is illustrated in FIG. 8. FIG. 8 illustrates a case where information of G is used in a case of paying attention to R, while information of B is not used.

In addition, FIG. 8 illustrates a case where the information of B is used in a case of paying attention to G, while information of R is not used, and a case where the information of R is used in a case of paying attention to B, while the information of G is not used.

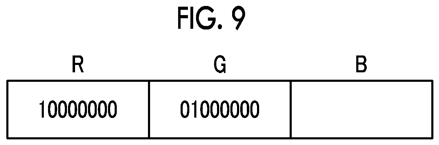

FIG. 9 is a schematic diagram illustrating an example of the pixel value of the print data according to the third example. An example in which the pixel value of G, which is 8-bit data, is connected to the pixel value of R, which is 8-bit data, as the pixel value of the print data is illustrated in FIG. 9. In addition, in FIG. 9, the pixel value of B that is not used for the print data pixel value is illustrated as a blank.

In the print data, an example of the pixel value in which a part of the RGB information is used includes 16-bit data arranged in the order of the pixel value of R and the pixel value of G from the most significant bit side in a case of paying attention to R. The pixel value illustrated in FIG. 8 is represented by 32832 by applying decimal numbers.

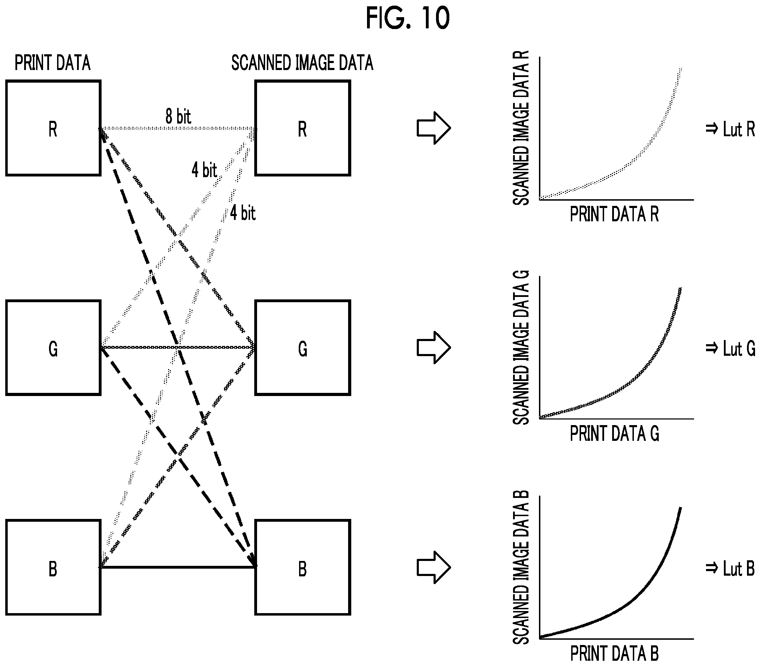

FIG. 10 is a schematic diagram illustrating a fourth example of the pixel value of the print data. Another example in which a part of the information on the color different from the color of interest is used is illustrated in FIG. 10. FIG. 10 illustrates a case where a part of the information of G and a part of the information of B are used in a case of paying attention to R.

In addition, FIG. 10 illustrates a case where a part of the information of B and a part of the information of R are used in a case of paying attention to G, and a case where a part of the information of R and a part of the information of G are used in a case of paying attention to B.

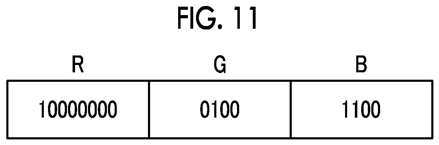

FIG. 11 is a schematic diagram illustrating an example of the pixel value of the print data according to the fourth example. An example is illustrated in FIG. 11 in which the upper 4 bits of the pixel value of G, which is 8-bit data, and the upper 4 bits of the pixel value of B, which is 8-bit data, are connected to the pixel value of R, which is 8-bit data, as the pixel value of the print data. The pixel value illustrated in FIG. 11 is represented by 32844 by applying decimal numbers.

In the aspect in which a part of the information on the color different from the color of interest is used as the pixel value of the color of interest, the effect can be expected in a case where the color different from the color of interest has an effect at the same pixel position, such as that the same image is not generated for a B channel of the scanned image data between B 100% of blue and B 100% of composite black.

### [Example in Which CMYK is Applied to Print Data]

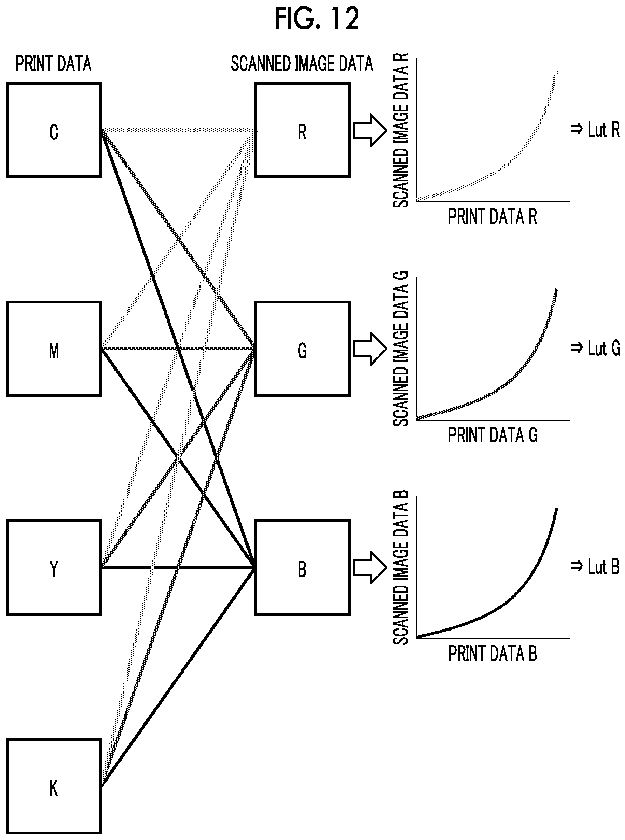

FIG. 12 is a schematic diagram illustrating a fifth example of the pixel value of the print data. In FIG. 12, a case where the print data is CMYK and the scanned image data is RGB is illustrated. In addition, an example in which all the information of CMYK is used is illustrated in FIG. 12.

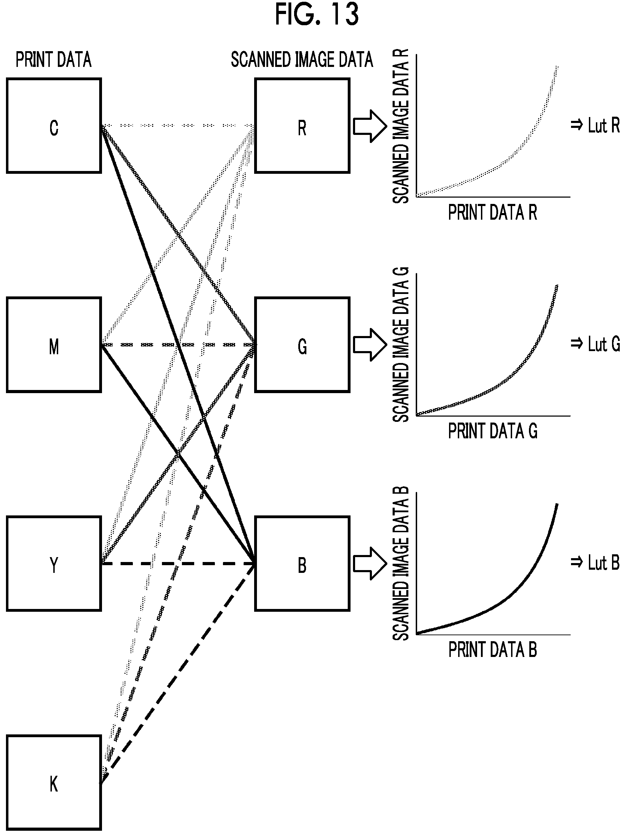

FIG. 13 is a schematic diagram illustrating a sixth example of the pixel value of the print data. An example in which a part of the information of CMYK is used is illustrated in FIG. 13. For example, in a case where the color of interest is R, a pixel value of M and a pixel value of Y of the print data having a relatively strong correlation with R are used, and a part of a pixel value of C and a part of a pixel value of K of the print data having a relatively weak correlation with R are used, and the pixel value conversion lookup table LutR of R is created.

In a case where the color of interest is G, the pixel value of C and the pixel value of Y of the print data having a relatively strong correlation with G are used, and a part of the pixel value of M and a part of the pixel value of K of the print data having a relatively weak correlation with G are used, and the pixel value conversion lookup table LutG of G is created.

In a case where the color of interest is B, the pixel value of C and the pixel value of M of the print data having a relatively strong correlation with B are used, and a part of the pixel value of Y and a part of the pixel value of K of the print data having a relatively weak correlation with G are used, and the pixel value conversion lookup table LutB of G is created.

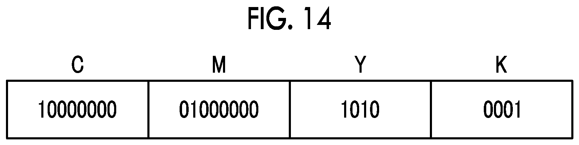

FIG. 14 is a schematic diagram illustrating an example of the pixel value of the print data according to the sixth example. In FIG. 14, an example is illustrated in which in a case where the color of interest is B, the pixel value of C which is 8-bit data, the pixel value of M which is 8-bit data, the upper 4 bits of the pixel value of Y which is 8-bit data, and the upper 4 bits of the pixel value of K which is 8-bit data are connected, and the pixel value of the print data is represented as 24-bit data.

FIGS. 12 to 14 exemplify a case where the scanned image data has RGB color information, but the color information of the scanned image data may be CMYK, or may be color information in a case where a complementary color scanner is used.

### [Hardware Configuration of Image Processing Apparatus]

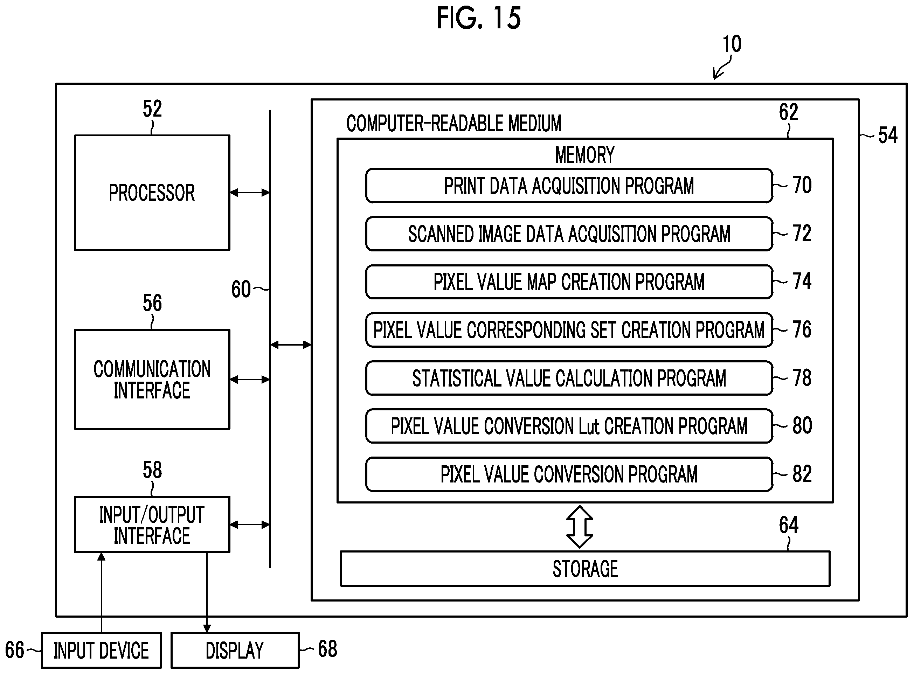

FIG. 15 is a block diagram illustrating a hardware configuration of the image processing apparatus illustrated in FIG. 1. A computer comprising one or more processors and one or more memories that store a program including instructions executed by the one or more processors is applied to the image processing apparatus 10 illustrated in FIG. 1.

The computer applied to the image processing apparatus 10 may be a personal computer or may be a workstation. The computer may be a virtual machine. The image processing apparatus 10 may be configured by using a plurality of computers.

The image processing apparatus 10 comprises a processor 52, a computer-readable medium 54, a communication interface 56, an input/output interface 58, and a bus 60.

The processor 52 includes a CPU. The processor 52 may include a GPU. It should be noted that CPU is an abbreviation for central processing unit. GPU is an abbreviation for graphics processing unit.

The processor 52 is connected to the computer-readable medium 54, the communication interface 56, and the input/output interface 58 via the bus 60. An input device 66 and a display 68 are connected to the image processing apparatus 10 via the input/output interface 58.

In the image processing apparatus 10, the processor 52 executes the program stored in the computer-readable medium 54 to realize various functions. It should be noted that the term "program" is synonymous with the term "software".

The computer-readable medium 54 comprises a memory 62 as a main memory and a storage 64 as an auxiliary memory. A semiconductor memory, a hard disk device, a solid-state drive device, and the like may be applied to the computer-readable medium 54. Any combination of a plurality of devices may be applied to the computer-readable medium 54.

It should be noted that the hard disk device may be referred to as HDD that is an abbreviation for hard disk drive in English. The solid-state drive device may be referred to as SSD that is an abbreviation for solid state drive in English.

The image processing apparatus 10 performs data communication with an external device via the communication interface 56. Various standards, such as USB, may be applied to the communication interface 56. Any of wired communication or wireless communication may be applied to a communication form of the communication interface 56. It should be noted that USB is an abbreviation for universal serial bus, and is a registered trademark.

The input device 66 and the display 68 are connected to the processor 52 via the input/output interface 58. An input device such as a keyboard and a mouse is applied to the input device 66. The display 68 displays various types of information applied to the image processing apparatus 10.

The display 68 is used as a part of a GUI in a case where an input from the input device 66 is received. It should be noted that the display 68 is not limited to one, and a multi-display form comprising a plurality of displays can also be adopted.

A liquid crystal display, an organic EL display, a projector, and the like may be applied to the display 68. Any combination of a plurality of devices may be applied to the display 68. EL of the organic EL display is an abbreviation for electro-luminescence.

The memory 62 of the computer-readable medium 54 stores a print data acquisition program 70, a scanned image data acquisition program 72, a pixel value map creation program 74, a pixel value corresponding set creation program 76, a statistical value calculation program 78, a pixel value conversion lookup table creation program 80, and a pixel value conversion program 82 executed by the processor 52.

The print data acquisition program 70 is applied to the print data acquisition unit 12 illustrated in FIG. 1 and realizes a function of acquiring the print data. The scanned image data acquisition program 72 is applied to the scanned image data acquisition unit 14 and realizes a function of acquiring the scanned image data. The pixel value map creation program 74 is applied to the pixel value map creation unit 16 and realizes a function of creating the print pixel value map PM and the scanned pixel value map SM illustrated in FIG. 2.

The pixel value corresponding set creation program 76 is applied to the pixel value corresponding set creation unit 18 and realizes a function of creating the pixel value corresponding set SE illustrated in FIG. 3. The statistical value calculation program 78 is applied to the statistical value calculation unit 20 and realizes a function of calculating the statistical value SV of the set of the pixel values in the scanned image data illustrated in FIG. 3.

The pixel value conversion lookup table creation program 80 is applied to the pixel value conversion lookup table creation unit 22 and realizes a function of creating a pixel value conversion lookup table for each color. The pixel value conversion program 82 is applied to the pixel value conversion unit 24 and realizes a function of converting the pixel value of the print data for each color using the pixel value conversion lookup table.

Various programs stored in the computer-readable medium 54 include one or more instructions. The computer-readable medium 54 stores various types of data, various parameters, and the like.

Here, examples of a hardware structure of the processor 52 include a CPU, a GPU, a programmable logic device (PLD), and an application specific integrated circuit (ASIC). The CPU is a general-purpose processor that executes a program and acts as various functional units. The GPU is a processor specialized in image processing.

The PLD is a processor capable of changing a configuration of an electric circuit after manufacturing a device. An example of the PLD is a field programmable gate array (FPGA). The ASIC is a processor comprising a dedicated electric circuit specifically designed to execute specific processing.

One processing unit may be configured with one of the various processors or may be configured with two or more processors of the same type or different types. Examples of a combination of various processors include a combination of one or more FPGAs and one or more CPUs, and a combination of one or more FPGAs and one or more GPUs. Another example of a combination of various processors includes a combination of one or more CPUs and one or more GPUs.

A plurality of functional units may be configured by using one processor. As an example of configuring a plurality of functional units by using one processor, there is an aspect in which as typified by a computer such as a client or a server, a combination of one or more CPUs and software such as a system on a chip (SoC) is applied to configured one processor, and the processor is caused to act as a plurality of functional units.

As another example of configuring a plurality of functional units by using one processor, there is an aspect in which a processor that realizes functions of an entire system including a plurality of functional units using one IC chip is used. It should be noted that IC is an abbreviation for integrated circuit.

As described above, various functional units are configured by using one or more of the various processors described above as the hardware structure. Furthermore, the hardware structure of the above-described various processors is, more specifically, an electric circuit (circuitry) in which circuit elements such as semiconductor elements are combined.

In the image processing apparatus 10, in a case where registration processing, resolution conversion processing, and color conversion processing are performed, a registration program that realizes a registration function, a resolution conversion program that realizes a resolution conversion function, and a color conversion program that realizes a color conversion function may be stored in the memory 62.

In addition, as in the image processing apparatus 10, a computer including one or more processors and one or more memories that store a program including one or more instructions executed by the one or more processors is applied to the examination apparatus 30 illustrated in FIG. 1. A part or all of the computer applied to the image processing apparatus 10 and the computer applied to the examination apparatus 30 may be shared.

### [Procedure of Examination Method According to Embodiment]

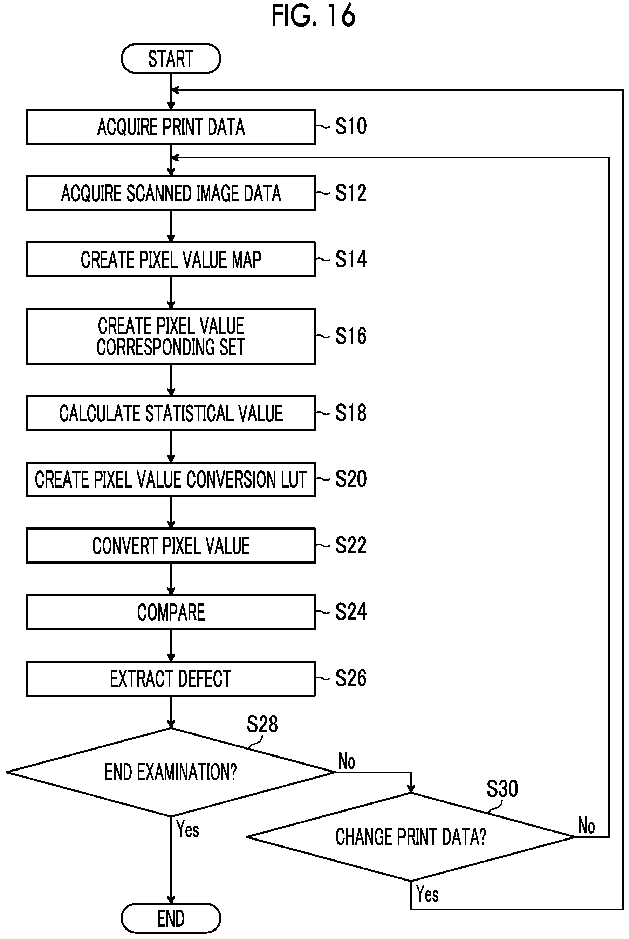

FIG. 16 is a flowchart illustrating a procedure of an examination method according to the embodiment. In a print data acquisition step S10, the print data acquisition unit 12 illustrated in FIG. 1 acquires the print data. After the print data acquisition step S10, the processing proceeds to a scanned image data acquisition step S12.

In the scanned image data acquisition step S12, the scanned image data acquisition unit 14 acquires the scanned image data. After the scanned image data acquisition step S12, the processing proceeds to a pixel value map creation step S14. The scanned image data acquisition step S12 may be executed in parallel with the print data acquisition step S10, or the order of the print data acquisition step S10 and the scanned image data acquisition step S12 may be interchanged.

In the pixel value map creation step S14, the pixel value map creation unit 16 creates the print pixel value map PM from the print data acquired in the print data acquisition step S10 and creates the scanned pixel value map SM from the scanned image data acquired in the scanned image data acquisition step S12. After the pixel value map creation step S14, the processing proceeds to a pixel value corresponding set creation step S16.

In the pixel value corresponding set creation step S16, the pixel value corresponding set creation unit 18 creates the pixel value corresponding set SE illustrated in FIG. 3 using the print pixel value map PM and the scanned pixel value map SM. After the pixel value corresponding set creation step S16, the processing proceeds to a statistical value calculation step S18.

In the statistical value calculation step S18, the statistical value calculation unit 20 calculates the statistical value SV of the set of the pixel values of the scanned image data for each pixel value of the print data using the pixel value corresponding set SE. After the statistical value calculation step S18, the processing proceeds to a pixel value conversion lookup table creation step S20.

In pixel value conversion lookup table creation step S20, the pixel value conversion lookup table creation unit 22 creates the pixel value conversion lookup table applied to the conversion processing of the pixel value of the print data using the statistical value SV calculated in the statistical value calculation step S18. As an example of the pixel value conversion lookup table for each color of the print data, in FIG. 5 and the like, the pixel value conversion lookup table LutR, the pixel value conversion lookup table LutG, and the pixel value conversion lookup table LutB for each color are illustrated. After the pixel value conversion lookup table creation step S20, the processing proceeds to a pixel value conversion step S22.

In the pixel value conversion step S22, the pixel value conversion unit 24 converts the pixel value of the print data for each color of the print data using the pixel value conversion lookup table created in the pixel value conversion lookup table creation step S20 to create the reference image data. After the pixel value conversion step S22, the processing proceeds to a comparison step S24.

In the procedure of the examination method, the steps from the print data acquisition step S10 to the pixel value conversion step S22 are understood as the procedure of the image processing method according to the embodiment. Each step included in the image processing method according to the embodiment is executed, and the reference image data is generated from the print data.

In the comparison step S24, the comparing unit 36 of the examination apparatus 30 illustrated in FIG. 1 compares the reference image data with the scanned image data which is the examination target image. After the comparison step S24, the processing proceeds to a defect extraction step S26. Before the comparison step S24 is executed, a reference image data acquisition step of acquiring the reference image data created in the pixel value conversion step S22 and a scanned image data acquisition step of acquiring the scanned image data as the examination target image may be executed. After the comparison step S24, the processing proceeds to a defect extraction step S26.

In the defect extraction step S26, the defect extraction unit 38 extracts the defect of the printed image based on the comparison result between the reference image data and the scanned image data derived in the comparison step S24. After the defect extraction step S26, the processing proceeds to an examination end determination step S28.

In the examination end determination step S28, the examination apparatus 30 determines whether or not an end condition of the defect examination of the printed image is satisfied. Examples of the end condition of the defect examination of the printed image include reception of a signal indicating the end of the examination of a specified number of printed images and the forced end.

In the examination end determination step S28, in a case where it is determined that the end condition of the defect examination of the printed image is not satisfied, No determination is made. In a case of the No determination, the defect examination of the printed image is continued, and the processing proceeds to a print data change determination step S30.

In the print data change determination step S30, it is determined whether or not the print data is changed. In the print data change determination step S30, in a case where it is determined that the print data is not changed, No determination is made. In a case of the No determination, the processing proceeds to the scanned image data acquisition step S12, the scanned image data of the printed image of the next examination target is acquired, and each step from the scanned image data acquisition step S12 to the print data change determination step S30 is repeatedly executed until Yes determination is made in the examination end determination step S28.

On the other hand, in the print data change determination step S30, in a case where it is determined that the print data is changed, Yes determination is made. In a case of the Yes determination, the processing proceeds to the print data acquisition step S10, the print data is acquired, and each step from the scanned image data acquisition step S12 to the print data change determination step S30 is repeatedly executed until Yes determination is made in the examination end determination step S28.

In the examination end determination step S28, in a case where it is determined that the end condition of the defect examination of the printed image is satisfied, Yes determination is made. In a case of the Yes determination, specified end processing is executed, and the examination method is ended.

### [Action and Effect of Embodiment]

The image processing apparatus and the examination method according to the embodiment can obtain the following actions and effects.
[1] The pixel value of the print data is converted using the information on the pixel value of the scanned image data, and the reference image data used for the examination of the printed image is dynamically created each time the scanned image data is acquired. As a result, it is possible to convert the print data into the reference image data without depending on differences in printing conditions such as print media and ink and the imaging conditions of the scanner, and the accuracy of the examination of the printed image may be improved.
[2] In a case of converting the print data into the reference image data, the lookup table for each color applied to the print data is created. As a result, a complex operation is not performed, and the conversion of the print data into the reference image data is processed at high speed.
[3] The print pixel value map PM that represents the pixel value for each pixel position of the print data and the scanned pixel value map SM that represents the pixel value for each pixel position of the scanned image data for each color are created. As a result, the pixel value corresponding set SE, which is the set of the pixel values of the scanned image data for each pixel value of the print data, may be created from the correspondence relationship of the pixel values at the same positions of the print pixel value map PM and the scanned pixel value map SM.
[4] An arithmetic mean value or a median value is applied to the statistical value of the set of the pixel values in the scanned image data. As a result, a relatively high-reliable statistical value may be calculated by applying relatively short processing such as calculation of an arithmetic mean value.
[5] In a case where the print data including a plurality of pieces of color information is acquired, the pixel value of the scanned image data having the same color as the print data is associated with the pixel value of the print data for each color. As a result, relatively simple processing for each color may be applied as compared with relatively complex processing in which the correlation between colors is considered.
[6] In a case where the print data including a plurality of pieces of color information is acquired, the pixel value of the print data includes information on a plurality of colors. As a result, processing in which the influence of the color different from the color of interest is considered may be performed.

### [Application Example to Printing System]

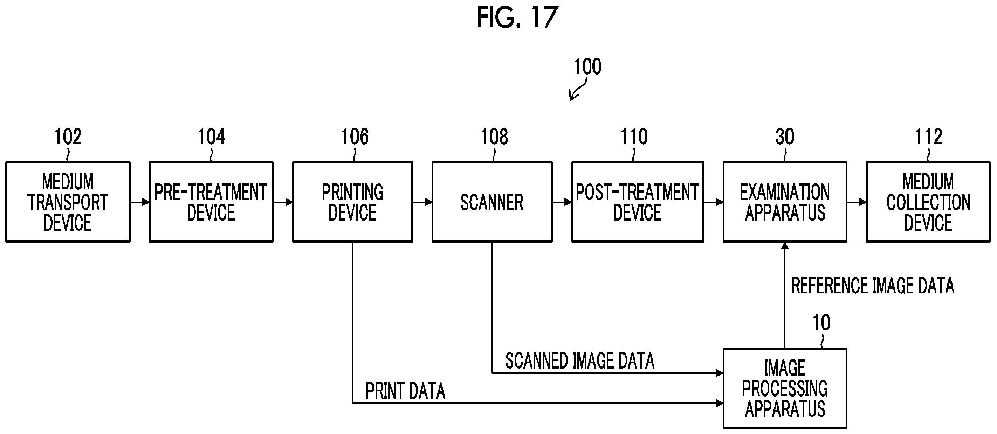

FIG. 17 is a block diagram illustrating a configuration example of a printing system comprising the image processing apparatus illustrated in FIG. 1. A printing system 100 illustrated in FIG. 17 comprises a medium supply device 102. The medium supply device 102 supplies a print medium to a transport device that transports the print medium in the printing system 100.

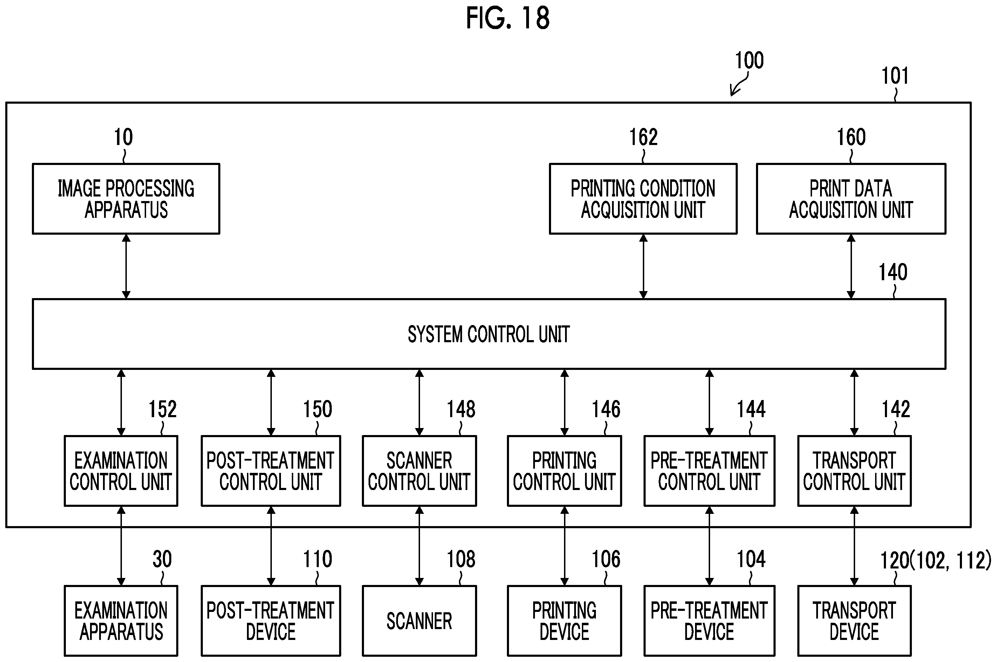

It should be noted that, in FIG. 17, the transport device that transports the print medium is not illustrated. The transport device is denoted by reference numeral 120 and is illustrated in FIG. 18. The transport device supports the print medium and transports the print medium from the medium supply device 102 toward a medium collection device 112. The direction of the arrow line illustrated in FIG. 17 represents a transport direction of the print medium supported by the transport device. The transport direction of the print medium may be referred to as a medium transport direction, a transport direction, or the like.

The printing system 100 comprises a pre-treatment device 104. The pre-treatment device 104 is disposed at a position on the downstream side of the medium supply device 102 in the medium transport direction. The downstream side in the medium transport direction represents the side of the medium collection device 112 in the medium transport direction.

The pre-treatment device 104 performs specified pre-treatment on the print medium before printing, which is transported by the transport device. Examples of the pre-treatment performed using the pre-treatment device 104 include temperature adjustment treatment for a print medium, coating of a pre-treatment liquid on a print medium, and reforming treatment for a print medium. In a case where the pre-treatment on the print medium before printing is not performed, the pre-treatment device 104 may be omitted.

The printing system 100 comprises a printing device 106. The printing device 106 performs printing based on specified print data on the print medium transported by the transport device. An ink jet method in which an ink jet head corresponding to each of a plurality of colors is provided may be applied to the printing device 106.

As the ink jet head, a line type head in which a plurality of nozzles are disposed over a length corresponding to the entire width of the print medium in a medium width direction orthogonal to the medium transport direction may be applied. A structure in which a plurality of head modules are arranged may be applied to the line type ink jet head.

The ink jet head may be a serial type head that performs printing over the entire area of the print medium by moving the ink jet head and the print medium relative to each other in the medium transport direction and the medium width direction.

A jetting method of the ink jet head may be a piezoelectric method of utilizing deflection deformation of a piezoelectric element, a thermal method of utilizing a liquid film boiling phenomenon, or an electrostatic method of utilizing an electric field formed between the ink jet head and a print medium head.

It should be noted that the printing method of the printing device 106 is not limited to the ink jet method. An on-demand method such as an electrophotographic method, or a plate printing method such as offset printing may be applied to the printing device 106.

The printing system 100 comprises a scanner 108. The scanner 108 is disposed at a position on the downstream side of the printing device 106 in the medium transport direction. The downstream side in the medium transport direction represents the side of the medium collection device 112 in the medium transport direction.

The scanner 108 reads the printed image printed on the print medium and generates the scanned image data for each printed image. The scanned image data is transmitted to the examination apparatus 30. The printing system 100 may comprise a camera and an illumination device instead of the scanner 108.

The printing system 100 comprises a post-treatment device 110. The post-treatment device 110 is disposed at a position on the downstream side of the scanner 108 in the medium transport direction. The post-treatment device 110 performs post-treatment on the print medium on which the printed image is printed. Examples of the post-treatment on the print medium include drying treatment.

The positions of the scanner 108 and the post-treatment device 110 may be interchanged. In the printing system 100 illustrated in FIG. 17, reading of the printed image is performed using the scanner 108 before the post-treatment on the printed image, but the reading of the printed image may be performed using the scanner 108 after the post-treatment on the printed image.

The printing system 100 comprises the image processing apparatus 10 and the examination apparatus 30. The image processing apparatus 10 creates the reference image data applied to the examination apparatus 30 based on the print data transferred from the printing device 106 and the scanned image data transferred from the scanner 108.

The examination apparatus 30 is disposed at a position on the downstream side of the post-treatment device 110 in the medium transport direction. The examination apparatus 30 compares the reference image data created in the image processing apparatus 10 with the scanned image data transferred from the scanner 108, and performs the defect examination of the printed image that is the basis of the scanned image data. The examination apparatus 30 may transmit the result of the defect examination of the printed image to a control device of the printing system 100.

The printing system 100 comprises the medium collection device 112. The medium collection device 112 collects the printed image printed based on the print data. The medium collection device 112 may distinguish and collect the printed image of the examination pass in which the examination result indicating that the defect is not present is obtained in the examination apparatus 30, and the printed image of the examination fail in which the examination result indicating that the defect is present is obtained in the examination apparatus 30.

### [Electric Configuration of Printing System]

FIG. 18 is a functional block diagram illustrating an electric configuration of the printing system illustrated in FIG. 17. The printing system 100 comprises a control device 101 to which a computer is applied, and the control device 101 executes various programs corresponding to various functions to realize the various functions. The form of the computer applied to the control device 101 may be a personal computer or the like, as in the image processing apparatus 10 illustrated in FIG. 1.

The control device 101 is configured by using one or more computers. In each of various control units of the control device 101, one computer may configure one control unit, a plurality of computers may configure one control unit, or one computer may configure a plurality of control units.

The control device 101 comprises a system control unit 140. The system control unit 140 integrally controls the entire printing system 100. That is, the system control unit 140 transmits command signals to various processing units and controls each unit of the printing system 100 via the various processing units.

The control device 101 comprises a transport control unit 142. The transport control unit 142 sets transport conditions of the print medium and controls the operation of the transport device 120 based on the command signals transmitted from the system control unit 140. The transport device 120 illustrated in FIG. 18 supports the print medium and transports the print medium along a transport path of the print medium specified in the printing system 100.

The transport device 120 transports a medium in various devices constituting the printing system 100 such as the printing device 106. In addition, the transport device 120 transports the medium between various devices constituting the printing system 100.

The printing system 100 comprises a pre-treatment control unit 144. The pre-treatment control unit 144 sets pre-treatment conditions for the pre-treatment device 104 and controls the operation of the pre-treatment device 104 based on the command signals transmitted from the system control unit 140.

The printing system 100 comprises a printing control unit 146. The printing control unit 146 sets printing conditions and controls the operation of the printing device 106 based on the command signals transmitted from the system control unit 140. The printing control unit 146 comprises a print data processing unit that generates a halftone image for each color from the print data. The printing control unit 146 comprises a control signal generation unit that generates a control signal for ink jet heads for each color based on the halftone image for each color.

The printing system 100 comprises a scanner control unit 148. The scanner control unit 148 sets reading conditions for the scanner 108 and controls the operation of the scanner 108 based on the command signals transmitted from the system control unit 140. In addition, the scanner control unit 148 acquires a reading signal of the scanner 108. For example, the scanner control unit 148 acquires the scanned image data as a reading signal of the printed image from the scanner 108.

The printing system 100 comprises a post-treatment control unit 150. The post-treatment control unit 150 sets post-treatment conditions for the post-treatment device 110 and controls the operation of the post-treatment device 110 based on the command signals transmitted from the system control unit 140.

The printing system 100 comprises an examination control unit 152. The examination control unit 152 sets examination conditions for the examination apparatus 30 and controls the operation of the examination apparatus 30 based on the command signals transmitted from the system control unit 140.

The printing system 100 comprises a print data acquisition unit 160 and a printing condition acquisition unit 162. The print data acquisition unit 160 acquires the print data serving as base data for printing. The print data may be referred to as original document data, original image data, and the like.

The printing condition acquisition unit 162 acquires printing conditions applied to the printing device 106. Examples of the printing conditions may include a printing resolution, a printing speed, a type of print medium, a type of ink, and the like. The printing control unit 146 controls the printing device 106 by applying the printing conditions acquired using the printing condition acquisition unit 162.

### [Application Example to Lookup Table Manufacturing Method]

The procedure of the examination method illustrated in FIG. 16 includes a method of manufacturing a lookup table that functions as conversion data for converting the pixel value of the print data according to the tendency of the pixel value of the read data. That is, each step from the print data acquisition step S10 to the pixel value conversion lookup table creation step S20 illustrated in FIG. 16 is applied to the procedure of the manufacturing method of the lookup table.

### [Application Example to Reference Image Data Manufacturing Method]

The steps from the print data acquisition step S10 to the pixel value conversion step S22 in the procedure of the examination method illustrated in FIG. 16 are understood as a reference image data manufacturing method of creating the reference image data applied to the examination of the printed article. In other words, the image processing apparatus 10 illustrated in FIG. 1 functions as a reference image data manufacturing apparatus that manufactures the reference image data transmitted to the examination apparatus 30.

In the above-described embodiment of the present invention, the configuration requirements can be appropriately changed, added, or deleted without departing from the gist of the present invention. The present invention is not limited to the above-described embodiment, and various modifications can be made by a person having ordinary knowledge in the art within the technical idea of the present invention. In addition, the embodiment, the modification example, and the application example may be appropriately combined and performed.

### Explanation of References

10: image processing apparatus
12: print data acquisition unit
14: scanned image data acquisition unit
16: pixel value map creation unit
18: pixel value corresponding set creation unit
20: statistical value calculation unit
22: pixel value conversion lookup table creation unit
24: pixel value conversion unit
30: examination apparatus
32: reference image data acquisition unit
34: examination target image data acquisition unit
36: comparing unit
38: defect extraction unit
52: processor
54: computer-readable medium
56: communication interface
58: input/output interface
60: bus
62: memory
64: storage
66: input device
68: display
70: print data acquisition program
72: scanned image data acquisition program
74: pixel value map creation program
76: pixel value corresponding set creation program
78: statistical value calculation program
80: pixel value conversion lookup table creation program
82: pixel value conversion program
100: printing system
101: control device
102: medium transport device
104: pre-treatment device
106: printing device
108: scanner
110: post-treatment device
112: medium collection device
140: system control unit
142: transport control unit
144: pre-treatment control unit
146: printing control unit
148: scanner control unit
150: post-treatment control unit
152: examination control unit
160: print data acquisition unit
162: printing condition acquisition unit
S10 to S30: each step of examination method
LutR: lookup table
LutG: lookup table
LutB: lookup table
PM: print pixel value map
P₁₁: pixel position
P₁₂: pixel position
P₁₃: pixel position
P₂₁: pixel position
P₂₂: pixel position
P₂₃: pixel position
RI: reference image data
SE: pixel value corresponding set
SM: scanned pixel value map
SV: statistical value

## Claims

1. An image processing method comprising:
acquiring first image data;
acquiring second image data generated by reading a first image from which the first image data is output;
creating conversion data for converting a first pixel value of the first image data for each color, based on a statistical value of a set of second pixel values for each first pixel value, where the second pixel value represents a pixel value for each pixel position in the second image data and is associated with the first pixel value that represents a pixel value at the same pixel position in the first image data; and
converting the first pixel value of the first image data for each color using the conversion data created each time the second image data is acquired.

2. The image processing method according to claim 1,
wherein a first pixel value map that represents the first pixel value for each pixel position in the first image data is created,
a second pixel value map that represents the second pixel value for each pixel position in the second image data is created, and
the second pixel value is associated with the first pixel value at the same pixel position in the first image data using the first pixel value map and the second pixel value map.

3. The image processing method according to claim 1,
wherein an arithmetic mean value or a median value is applied as the statistical value.

4. The image processing method according to claim 1,
wherein the first image data including information on a plurality of colors is acquired, and
the second pixel value for each pixel position in the second image data for each color is associated with the first pixel value at the same pixel position in the first image data of the same color as the second image data.

5. The image processing method according to claim 1,
wherein the first image data including information on a plurality of colors is acquired, and
the second pixel value for each pixel position in the second image data for each color is associated with the first pixel value of the first image data including the information on the plurality of colors.

6. The image processing method according to claim 1,
wherein a lookup table for converting the first pixel value of the first image data for each color is created as the conversion data, and
reference data in a case of examining a defect of an output image of the first image data by converting the first pixel value of the first image data is created using the lookup table.

7. The image processing method according to claim 1,
wherein print data serving as an original document for printing is acquired as the first image data, and
read data for each color of a printed image printed by applying the print data is acquired as the second image data.

8. An image processing apparatus comprising:
one or more processors; and
one or more memories that store a program including one or more instructions executed by the one or more processors,
wherein the one or more processors are configured to execute the program to:
acquire first image data;
acquire second image data generated by reading a first image from which the first image data is output;
create conversion data for converting a first pixel value of the first image data for each color, based on a statistical value of a set of second pixel values for each first pixel value, where the second pixel value represents a pixel value for each pixel position in the second image data and is associated with the first pixel value that represents a pixel value at the same pixel position in the first image data; and
convert the first pixel value of the first image data for each color using the conversion data created each time the second image data is acquired.

9. A program causing a computer including one or more processors and one or more memories that store a program including one or more instructions executed by the one or more processors to realize:
a function of acquiring first image data;
a function of acquiring second image data generated by reading a first image from which the first image data is output;
a function of creating conversion data for converting a first pixel value of the first image data for each color, based on a statistical value of a set of second pixel values for each first pixel value, where the second pixel value represents a pixel value for each pixel position in the second image data and is associated with the first pixel value that represents a pixel value at the same pixel position in the first image data; and
a function of converting the first pixel value of the first image data for each color using the conversion data created each time the second image data is acquired.

10. A non-transitory computer-readable recording medium on which the program according to claim 9 is recorded.

11. Conversion data that converts a first pixel value of first image data for each color, based on a statistical value of a set of second pixel values for each first pixel value, where the second pixel value represents a pixel value for each pixel position in second image data generated by reading a first image output based on the first image data and is associated with the first pixel value that represents a pixel value at the same pixel position in the first image data.
